# EUROPEAN PATENT SPECIFICATION

(11) **EP 3 225 791 B1**
(45) Date of publication and mention of the grant of the patent: **05.02.2020**
(21) Application number: 16202247.9
(22) Date of filing: 05.12.2016
(51) Int. Cl.: F01D 25/16, F01D 25/18, F16J 15/16

(54) **STRUCTURE FOR ROTOR OF REMOVING BEARING OIL**
STRUKTUR FÜR ROTOR ZUR ENTFERNUNG VON LAGERÖL
STRUCTURE DE ROTOR D'ENLÈVEMENT D'HUILE DE PALIER

(30) Priority: 14.12.2015 KR 20150178518
(43) Date of publication of application: 04.10.2017
(73) Proprietor: Doosan Heavy Industries & Construction Co., Ltd., Seongsan-gu Changwon-si, Gyeongsangnam-do 51711 (KR)
(72) Inventor: AHN, Jun Ho, 51536 Gyeongsangnam-do (KR)
(74) Representative: Isarpatent

(56) References cited:
- EP-A2- 1 589 190
- JP-U- S57 152 406
- US-A- 4 350 345
- US-A1- 2010 196 140

## Description

The present invention relates to a structure for a rotor of removing bearing oil.

EP 1 589 190 A2 discloses structure for a rotor of removing bearing oil comprising a rotor shaft disposed in a casing of a turbine, and an annular oil scattering means formed between an oil deflector and a bearing supporter on the rotor shaft in a circumferential direction to scatter bearing oil flowing from the bearing supporter toward the oil deflector along a surface of the rotor shaft.

JP S57 152406 U discloses a similar structure for a rotor of removing bearing oil.

### Description of the Related Art

In general, a turbine which is a power generating device converting heat energy of fluid such as gas, steam, etc. into rotational force which is mechanical energy, includes a rotor including a plurality of buckets so as to be axially rotated by the fluid, and a casing installed to surround the rotor and including a plurality of diaphragms.

Here, a gas turbine includes a compressor, a combustor, and a turbine, in which as the compressor rotates, outside air is sucked and compressed to be sent to the combustor, and the compressed air and fuel are mixed with each other in the combustor such that combustion is made. High-pressure and high-temperature gas generated in the combustor rotates the rotor of the turbine while passing through the turbine to drive a generator.

In the steam turbine, a high-pressure turbine, a medium-pressure turbine, and a low-pressure turbine are connected in series or in parallel to rotate the rotor. In a case of series connection, the high-pressure turbine, the medium-pressure turbine, and the low-pressure turbine share one rotor.

In the steam turbine, each of the turbines includes the diaphragms and the buckets based on the rotor in the casing, and steam rotates the rotor while passing through the diaphragms and the buckets, thereby driving the generator.

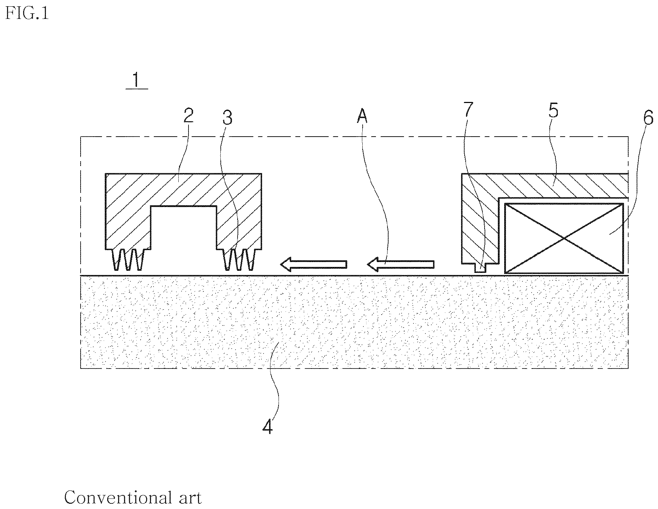

A shaft is disposed at the center of rotation of the rotor. Further, a bearing is disposed to contact both ends of the shaft to smoothly rotate the shaft. Referring to FIG. 1, a bearing 6 contacts an end of a shaft 4 to enable smooth rotation of the shaft, and such bearing 6 is fixed and supported by a bearing supporter 5.

In order to increase a lifespan of the bearing that assists in rotation of the shaft 4 and to normally operate the bearing, bearing oil needs to be supplied. However, when the oil added to the bearing is introduced to the shaft 4 through the bearing and flows along the shaft 4, a problem that the oil is introduced into an inside of a turbine 1 (reference numeral A) occurs. In order to prevent such situation, according to the related art, a brush seal 7 is installed on the bearing supporter 5 to block the flow. Further, an oil deflector 2 is disposed and a labyrinth seal 3 is installed on the oil deflector 2 in case the oil passes through the brush seal 7, thereby preventing the bearing oil from flowing toward a center direction of the turbine 1.

However, when operating, the rotor inevitably moves in an axial direction or in a circumferential direction, and in this case, the labyrinth seal 3 of the oil deflector 2 and the brush seal 7 of the bearing supporter 5 may not function properly.

In this case, the bearing oil passes through the oil deflector 2 and reacts with high-temperature and high-pressure gas or steam, as a result, the bearing oil is carbonized.

### [Related Art Document]

### [Patent Document]

(Patent Document 1) U.S. Patent No. US 4350345 A

### SUMMARY OF THE INVENTION

A object of the present invention is to provide a structure for a rotor of removing bearing oil that is capable of suppressing carbonization caused by a reaction with high-temperature operating fluid at an oil deflector by removing bearing oil flowing along a shaft of the rotor between a bearing and the oil deflector by implementing a predetermined shape on the shaft of the rotor.

In accordance with one aspect of the present invention, there is provided a structure for a rotor of removing bearing oil, as defined in independent claim 1.

A surface of the scattering groove that is adjacent to the bearing supporter may be inclined in multiple steps.

The scattering groove may be formed in plural on the rotor shaft.

The structure may further include a first interruption part disposed between the plurality of scattering grooves to interrupt flow of bearing oil from the bearing supporter toward the oil deflector.

The first interruption part may be provided as a first fine groove formed between the plurality of scattering grooves.

The first interruption part may be provided as a first fine protrusion formed between the plurality of scattering grooves.

A surface of the oil blocking means that is adjacent to the bearing supporter may be inclined, and a surface of the oil blocking means that is adjacent to the oil deflector may be stepped in order to block the flow of the bearing oil from the bearing supporter toward the oil deflector.

A surface of the oil blocking means that is adjacent to the bearing supporter, and a surface of the oil blocking means that is adjacent to the oil deflector may be inclined toward the bearing supporter in order to block the flow of the bearing oil from the bearing supporter toward the oil deflector.

A direction in which the bearing oil is scattered by the oil scattering means may be directed between the bearing supporter and the casing.

The oil scattering means may be provided as a scattering groove formed in the oil blocking means on the rotor shaft, and the scattering groove may be inclined toward the bearing supporter.

The scattering groove may be formed in plural on the rotor shaft.

The structure may further include a second interruption part disposed between the oil blocking means and the bearing supporter on the rotor shaft to interrupt the flow of the bearing oil from the bearing supporter toward the oil deflector.

The second interruption part may be provided as a second fine groove formed between the oil blocking means and the bearing supporter.

The second interruption part may be provided as a second fine protrusion formed between the oil blocking means and the bearing supporter.

### BRIEF DESCRIPTION OF THE DRAWINGS

The above and other objects, features and other advantages of the present invention will be more clearly understood from the following detailed description taken in conjunction with the accompanying drawings, in which:
FIG. 1 is a view illustrating a state in which bearing oil flows along a rotor shaft of a turbine according to the related art.
FIG. 2 is a view illustrating a structure for a rotor according to a first embodiment of the present invention.
FIG. 3 is a view illustrating a structure for a rotor according to a second embodiment of the present invention.
FIG. 4 is a view illustrating a structure for a rotor according to a third embodiment of the present invention.
FIG. 5 is a view illustrating a structure for a rotor according to a fourth embodiment of the present invention.
FIG. 6 is a view illustrating a structure for a rotor according to a fifth embodiment of the present invention.
FIG. 7 is a view illustrating a structure for a rotor according to a sixth embodiment of the present invention.
FIG. 8 is a view illustrating a structure for a rotor according to a seventh embodiment of the present invention.
FIG. 9 is a view illustrating a structure for a rotor according to an eighth embodiment of the present invention.
FIG. 10 is a view illustrating a structure for a rotor according to a ninth embodiment of the present invention.
FIG. 11 is a view illustrating a structure for a rotor according to a tenth embodiment of the present invention.
FIG. 12 is a view illustrating a structure for a rotor according to an eleventh embodiment of the present invention.
FIG. 13 is a view illustrating a structure for a rotor according to a twelfth embodiment of the present invention.

### DESCRIPTION OF SPECIFIC EMBODIMENTS

Hereinafter, a structure for a rotor of removing bearing oil according to preferred embodiments of the present invention will be described in detail with reference to the accompanying drawings.

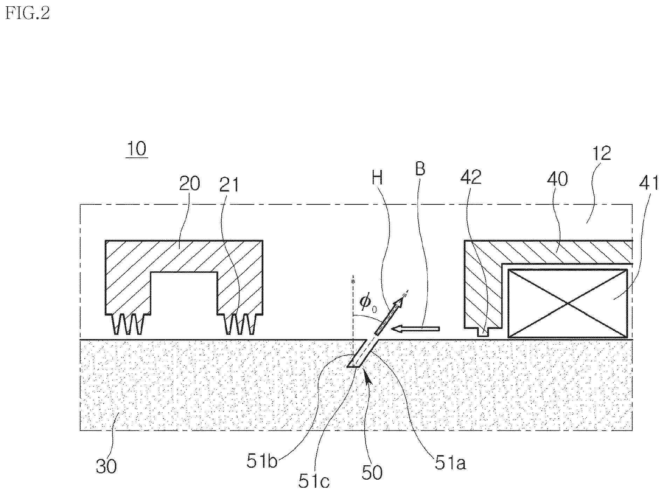

FIG. 2 is a view illustrating a structure for a rotor according to a first embodiment of the present invention. Referring to FIG. 2, according to the first embodiment of the present invention, a structure for a rotor may include a rotor shaft 30 and an oil scattering means 50.

First, the rotor shaft 30 is provided as a part for connecting a compressor section and a turbine section that are components of a turbine, and may be disposed in a casing 12 of the turbine. Both sides of the rotor shaft 30 may each be supported by a bearing supporter 40 and installed so that the rotor shaft 30 may smoothly rotate, and an oil deflector 20 may be disposed adjacent to the respective bearing supporter 40. The oil deflector 20 prevents bearing oil that is added for smooth operation of the bearing from flowing along the rotor shaft 30 to the compressor section or the turbine section.

Next, the oil scattering means 50 may be formed between the oil deflector 20 and the bearing supporter 40 on the rotor shaft 30 in a circumferential direction, to scatter the bearing oil flowing from the bearing supporter 40 toward the oil deflector 20 along a surface of the rotor shaft 30. FIG. 2 illustrates a side cross-sectional view of the rotor shaft 30, in which it is possible to confirm a form in which the oil scattering means 50 is formed on the rotor shaft 30.

A direction in which the bearing oil is scattered by the oil scattering means 50 may be directed between the bearing supporter 40 and the casing 12. To this end, according to the first embodiment of the present invention, the oil scattering means 50 may be provided as a scattering groove 51 formed on the rotor shaft 30. In addition, the scattering groove 51 may be formed to be inclined toward the bearing supporter 40.

Referring to FIG. 2 again, the scattering groove 51 may be configured of an one-side slope 51a and an opposite-side slope 51b that are inclined at a gradient Φ₀, and a groove end 51c. The gradient Φ₀ may be appropriately selected according to an operation environment of the turbine. For example, when intending to scatter the bearing oil in a direction toward between the bearing supporter 40 and the casing 12, the slopes may be implemented to have an angle value toward an upper portion of the bearing supporter 40 and a gradient of less than 90°.

The bearing oil added for smooth operation of a bearing 41 may pass through a brush seal 42 installed on the bearing supporter 40 and reach the scattering groove 51 along the rotor shaft 30 (reference numeral B). The bearing oil flowing along the one-side slop 51a of the scattering groove 51 is applied with centrifugal force due to the rotation of the rotor shaft 30. The centrifugal force that is acted in a radial direction acts as a force to scatter the bearing oil toward an outer side of the rotor shaft 30. As such, the flow of the bearing oil is blocked by the scattering groove 51, and the bearing oil may not flow toward the oil deflector 20.

Even though the bearing oil continuously flows along the one-side slope 51a, since the flow direction is bent at the groove end 51c, the flow of the bearing oil is disrupted again. Further, when flowing along the opposite-side slope 51b, the bearing oil is applied with the centrifugal force again to be scattered toward the casing 12 and the bearing supporter 40 (reference numeral H).

That is, it is possible to effectively block the flow of the bearing oil toward the oil deflector 20 from the bearing supporter 40 merely by forming one scattering groove 51 on the rotor shaft 30.

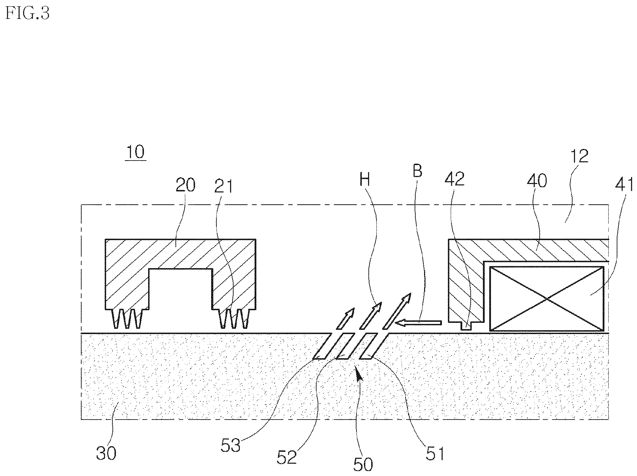

Next, FIG. 3 is a view illustrating a structure for a rotor according to a second embodiment of the present invention. Referring to FIG. 3, according to the second embodiment of the present invention, a structure for a rotor may include a rotor shaft 30 and an oil scattering means 50. A description for the rotor shaft 30 is the same as in the first embodiment of the present invention, and thus will be omitted.

Next, the oil scattering means 50 may be formed between the oil deflector 20 and the bearing supporter 40 on the rotor shaft 30 in a circumferential direction, to scatter the bearing oil flowing from the bearing supporter 40 toward the oil deflector 20 along the surface of the rotor shaft 30. FIG. 3 illustrates a side cross-sectional view of the rotor shaft 30, in which it is possible to confirm a form in which the oil scattering means 50 is formed on the rotor shaft 30.

A direction in which the bearing oil is scattered by the oil scattering means 50 may be directed between the bearing supporter 40 and the casing 12. To this end, according to the second embodiment of the present invention, the oil scattering means 50 may be provided as scattering grooves 51, 52 and 53 formed on the rotor shaft 30. In addition, the scattering grooves 51, 52, and 53 may be formed to be inclined toward the bearing supporter 40.

However, unlike the first embodiment of the present invention, according to the second embodiment of the present invention, the scattering groove 51, 52, and 53 may be provided in plural. In this case, the flow of the bearing oil may be blocked stage by stage. The number of scattering grooves may be various according to the operation environment, but in the second embodiment of the present invention, the number of scattering grooves is three.

That is, when the bearing oil added for smooth operation of the bearing 41 passes through the brush seal 42 installed on the bearing supporter 40 and reaches the scattering grooves 51, 52, and 53 along the rotor shaft 30, the flow of the bearing oil is primarily disrupted by the scattering groove 51 that is most adjacently disposed to the bearing supporter 40. Further, if the bearing oil passes over the first scattering groove 51 and keeps flowing by movement of the rotor shaft 30 in an axial direction or the circumferential direction during an operation process of the turbine, the flow of the bearing oil is disrupted again by the second scattering groove 52 disposed at the center. Here, the third scattering groove 53 may be preliminarily formed in order to finally block the bearing oil passing over the second scattering groove 52.

Comparison of quantitative representation of an amount of the bearing oil removed by the respective scattering grooves 51, 52, and 53 is represented using a size of arrows. That is, the amount of bearing oil removed at the first scattering groove 51 is largest, and the amount of removed bearing oil will become smaller at the second scattering groove 52 and the third scattering groove 53 in sequence due to sequential blocking of the flow.

That is, it is possible to block the flow of the bearing oil toward the oil deflector 20 from the bearing supporter 40 stage by stage by forming the plurality of scattering grooves 51, 52, 53 on the rotor shaft 30.

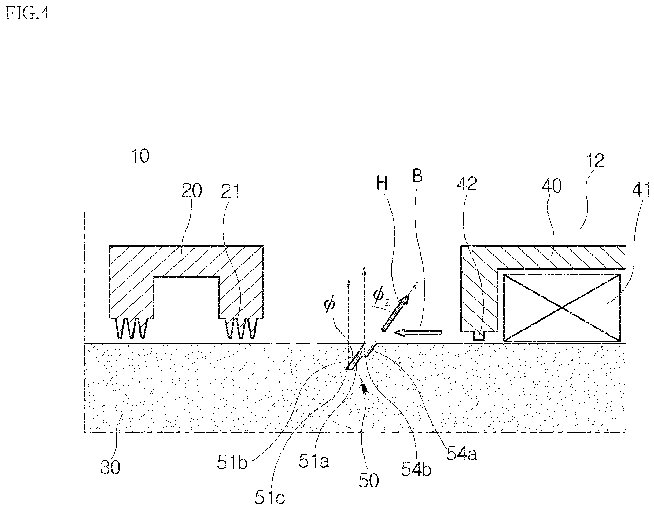

Next, FIG. 4 is a view illustrating a structure for a rotor according to a third embodiment of the present invention. Referring to FIG. 4, according to the third embodiment of the present invention, a structure for a rotor may include a rotor shaft 30 and an oil scattering means 50. A description for the rotor shaft 30 is the same as in the first embodiment of the present invention, and thus will be omitted.

The oil scattering means 50 may be formed between the oil deflector 20 and the bearing supporter 40 on the rotor shaft 30 in a circumferential direction, to scatter the bearing oil flowing from the bearing supporter 40 toward the oil deflector 20 along the surface of the rotor shaft 30. FIG. 4 illustrates a side cross-sectional view of the rotor shaft 30, in which it is possible to confirm a form in which the oil scattering means 50 is formed on the rotor shaft 30.

A direction in which the bearing oil is scattered by the oil scattering means 50 may be directed between the bearing supporter 40 and the casing 12. To this end, according to the third embodiment of the present invention, the oil scattering means 50 may be provided as a scattering groove 51 formed on the rotor shaft 30. In addition, the scattering groove 51 may be formed to be inclined toward the bearing supporter 40.

Further, according to the third embodiment, unlike the first embodiment of the present invention, in the scattering groove 51, a multi-step groove 54 inclined in multiple steps may be formed on the one-side slope 51a adjacent to the bearing supporter 40.

Referring to FIG. 4 again, the scattering groove 51 may be configured of an one-side slope 51a and an opposite-side slope 51b that are inclined at a gradient Φ₁, and a groove end 51c. Further, the multi-step groove 54 may be configured of a multi-step slope 54a that is inclined at a gradient Φ₂ and a multi-step groove end 54b.

The gradients Φ₁ and Φ₂ may be appropriately selected according to an operation environment of the turbine. For example, when intending to scatter the bearing oil in a direction toward between the bearing supporter 40 and the casing 12, the slopes may be implemented to have an angle value toward an upper portion of the bearing supporter 40 and a gradient of less than 90° in relation to a vertical line.

Further, the gradients Φ₁ and Φ₂ may not only be identical to each other but may also be different from each other. For example, the gradient Φ₂ may be relatively larger than the gradient Φ₁ in relation to the vertical line, such that the scattering force by the centrifugal force may be adjusted.

That is, it is possible to adjust a degree of scattering of the bearing oil flowing toward the oil deflector 20 from the bearing supporter 40 through the same gradient or different gradients, by forming the multi-step groove 54 in addition to the scattering groove 51 on the rotor shaft 30.

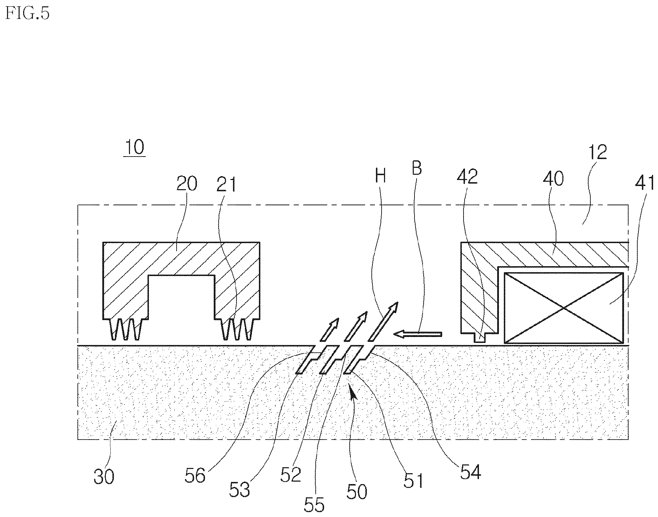

Next, FIG. 5 is a view illustrating a structure for a rotor according to a fourth embodiment of the present invention. Referring to FIG. 5, according to the fourth embodiment of the present invention, a structure for a rotor may include a rotor shaft 30 and an oil scattering means 50. A description for the rotor shaft 30 is the same as in the first embodiment of the present invention, and thus will be omitted.

The oil scattering means 50 may be formed between the oil deflector 20 and the bearing supporter 40 on the rotor shaft 30 in a circumferential direction, to scatter the bearing oil flowing from the bearing supporter 40 toward the oil deflector 20 along the surface of the rotor shaft 30. FIG. 5 illustrates a side cross-sectional view of the rotor shaft 30, in which it is possible to confirm a form in which the oil scattering means 50 is formed on the rotor shaft 30.

A direction in which the bearing oil is scattered by the oil scattering means 50 may be directed between the bearing supporter 40 and the casing 12. To this end, according to the fourth embodiment of the present invention, the oil scattering means 50 may be provided as scattering grooves 51, 52 and 53 and multi-step grooves 54, 55, and 56 formed on the rotor shaft 30. In addition, the scattering grooves 51, 52, and 53 and the multi-step grooves 54, 55, and 56 may be formed to be inclined toward the bearing supporter 40.

However, unlike the first embodiment of the present invention, according to the fourth embodiment of the present invention, the scattering groove 51, 52, and 53 and the multi-step groove 54, 55, and 56 may be provided in plural. In this case, the flow of the bearing oil may be blocked stage by stage. The number of scattering grooves and multi-step grooves may be various according to the operation environment, but in the fourth embodiment of the present invention, the number of scattering grooves and the number of multi-step grooves are three, respectively.

That is, when the bearing oil added for smooth operation of a bearing 41 passes through a brush seal 42 installed on the bearing supporter 40 and reaches the scattering grooves 51, 52, and 53 and the multi-step grooves 54, 55, and 56 along the rotor shaft 30, the flow of the bearing oil is primarily disrupted by the scattering groove 51 and the multi-step groove 54 that are most adjacently disposed to the bearing supporter 40. Further, if the bearing oil passes over the first scattering groove 51 and the first multi-step groove 54 and keeps flowing by the movement of the rotor shaft 30 in the axial direction or the circumferential direction during the operation process of the turbine, the flow of the bearing oil is disrupted again by the second scattering groove 52 and the second multi-step groove 55 that are disposed at the center. Here, the third scattering groove 53 and the third multi-step groove 56 may be preliminarily formed in order to finally block the bearing oil passing over the second scattering groove 52 and the second multi-step groove 55.

Comparison of quantitative representation of an amount of the bearing oil removed by the respective scattering grooves 51, 52, and 53 and multi-step grooves 54, 55, and 56 is represented using a size of arrows. That is, the amount of bearing oil removed at the first scattering groove 51 and the first multi-step groove 54 is largest, and the amount of removed bearing oil will become smaller at the second scattering groove 52 and the second multi-step groove 55, and the third scattering groove 53 and the third multi-step groove 56 in sequence due to sequential blocking of the flow.

That is, it is possible to block the flow of the bearing oil toward the oil deflector 20 from the bearing supporter 40 stage by stage by forming the plurality of scattering grooves 51, 52, 53 and the plurality of multi-step grooves 54, 55, and 56 on the rotor shaft 30. The gradients Φ₁ and Φ₂ of the scattering grooves 51, 52, and 53 and the multi-step grooves 54, 55, and 56 may be identical to each other or different from each other according to the operation environment as described above.

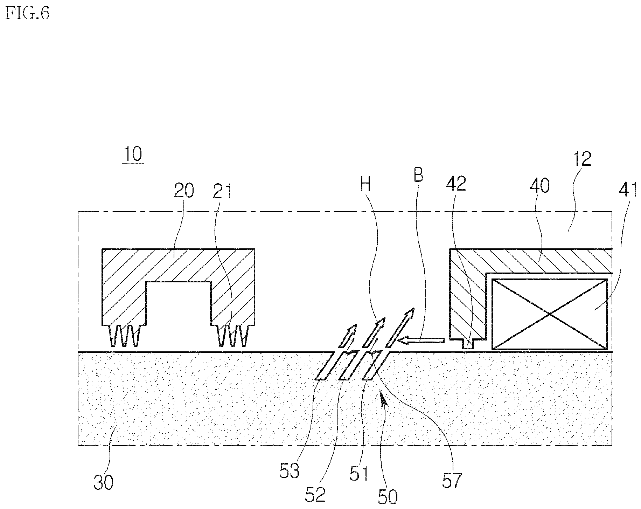

Next, FIG. 6 is a view illustrating a structure for a rotor according to a fifth embodiment of the present invention. Referring to FIG. 6, according to the fifth embodiment of the present invention, a structure for a rotor may include a rotor shaft 30, an oil scattering means 50, and a first interruption part. A description for the rotor shaft 30 is the same as in the first embodiment of the present invention, and thus will be omitted.

The oil scattering means 50 may be formed between the oil deflector 20 and the bearing supporter 40 on the rotor shaft 30 in a circumferential direction, to scatter the bearing oil flowing from the bearing supporter 40 toward the oil deflector 20 along the surface of the rotor shaft 30. FIG. 6 illustrates a side cross-sectional view of the rotor shaft 30, in which it is possible to confirm a form in which the oil scattering means 50 is formed on the rotor shaft 30.

A direction in which the bearing oil is scattered by the oil scattering means 50 may be directed between the bearing supporter 40 and the casing 12. To this end, according to the fifth embodiment of the present invention, the oil scattering means 50 may be provided as scattering grooves 51, 52 and 53 formed on the rotor shaft 30. In addition, the scattering grooves 51, 52, and 53 may be formed to be inclined toward the bearing supporter 40.

Here, the scattering grooves 51, 52, and 53 may be provided in plural. In this case, the flow of the bearing oil may be blocked stage by stage. The number of scattering grooves may be various according to the operation environment, but in the fifth embodiment of the present invention, the number of scattering grooves is three.

Further, the first interruption part may be disposed between the plurality of scattering grooves 51, 52, and 53 to interrupt the flow of the bearing oil toward the oil deflector 20 from the bearing supporter 40.

According to the fifth embodiment of the present invention, the first interruption part may be formed as a first fine groove 57 that is formed between the plurality of scattering grooves 51, 52, and 53. Referring to FIG. 6, two first fine grooves 57 are formed between three scattering grooves 51, 52, and 53 to interrupt the flow of the bearing oil between the respective scattering grooves 51, 52, and 53. The centrifugal force is applied due to the rotation of the rotor shaft 30 even in this case, thus the bearing oil is also scattered at the first fine groove 57.

Accordingly, it is possible to block the flow of the bearing oil toward the oil deflector 20 from the bearing supporter 40 more gradationally.

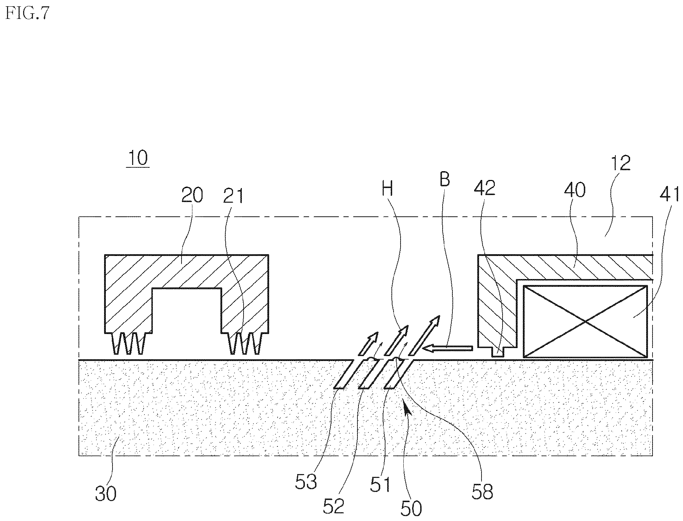

FIG. 7 is a view illustrating a structure for a rotor according to a sixth embodiment of the present invention. Referring to FIG. 7, according to the sixth embodiment of the present invention, a structure for a rotor may include a rotor shaft 30, an oil scattering means 50, and a first interruption part. A description for the rotor shaft 30 and the oil scattering means 50 is the same as in the fifth embodiment of the present invention, and thus will be omitted.

The first interruption part may be disposed between the plurality of scattering grooves 51, 52, and 53 to interrupt the flow of the bearing oil toward the oil deflector 20 from the bearing supporter 40.

According to the sixth embodiment of the present invention, the first interruption part may be formed as a first fine protrusion 58 that is formed between the plurality of scattering grooves 51, 52, and 53. Referring to FIG. 7, two first fine protrusions 58 are formed between three scattering grooves 51, 52, and 53 to interrupt the flow of the bearing oil between the respective scattering grooves 51, 52, and 53. The centrifugal force is applied due to the rotation of the rotor shaft 30 even in this case, thus the bearing oil is also scattered at the first fine protrusion 58. That is, the bearing oil is scattered toward the outer side of the rotor shaft 30 along a protrusion surface of the first fine protrusion 58. Accordingly, it is possible to block the flow of the bearing oil toward the oil deflector 20 from the bearing supporter 40 more gradationally.

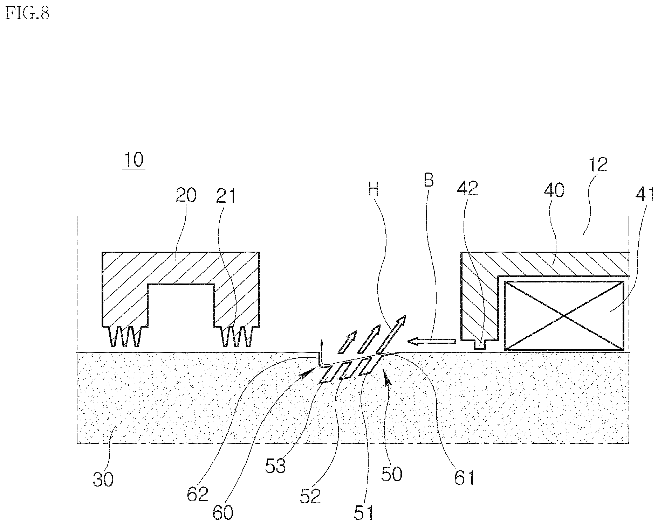

Next, FIG. 8 is a view illustrating a structure for a rotor according to a seventh embodiment of the present invention. Referring to FIG. 8, according to the seventh embodiment of the present invention, a structure for a rotor may include a rotor shaft 30, an oil scattering means 50, and an oil blocking means 60.

First, the rotor shaft 30 is provided as a part for connecting the compressor section and the turbine section that are components of the turbine, and may be disposed in the casing 12 of the turbine. Both sides of the rotor shaft 30 may each be supported by the bearing supporter 40 and installed so that the rotor shaft 30 may smoothly rotate, and the oil deflector 20 may be disposed adjacent to the respective bearing supporter 40. The oil deflector 20 prevents bearing oil that is added for smooth operation of the bearing from flowing along the rotor shaft 30 to the compressor section or the turbine section.

Next, the oil blocking means 60 may be formed between the oil deflector 20 and the bearing supporter 40 on the rotor shaft 30 in a circumferential direction, to block the flow of the bearing oil from the bearing supporter 40 toward the oil deflector 20.

According to the seventh embodiment of the present invention, a surface of the oil blocking means 60 that is adjacent to the bearing supporter 40 may be inclined, and a surface of the oil blocking means 60 that is adjacent to the oil deflector 20 may be stepped in order to block the flow of the bearing oil from the bearing supporter 40 toward the oil deflector 20. That is, the oil blocking means 60 may be configured of an inclined flow inducing surface 61 and a step part 62. The bearing oil flows along the inclined flow inducing surface 61 and then the flow of the bearing oil is blocked at the step part 62 formed in an almost vertical direction.

Further, the oil scattering means 50 may be formed on the oil blocking means 60 in a circumferential direction, to scatter the bearing oil flowing from the bearing supporter 40 toward the oil deflector 20 along the surface of the rotor shaft 30.

FIG. 8 illustrates a side cross-sectional view of the rotor shaft 30, in which it is possible to confirm a form in which the oil blocking means 60 and the oil scattering means 50 are formed on the rotor shaft 30.

A direction in which the bearing oil is scattered by the oil scattering means 50 may be directed between the bearing supporter 40 and the casing 12. To this end, according to the seventh embodiment of the present invention, the oil scattering means 50 may be provided as a plurality of scattering grooves 51, 52 and 53 formed on the rotor shaft 30. In addition, the scattering grooves 51, 52, and 53 may be formed to be inclined toward the bearing supporter 40.

According to the seventh embodiment of the present invention, the oil blocking means 60 is formed on the rotor shaft 30, and the plurality of scattering grooves 51, 52, and 53 are formed on the oil blocking means 60, thereby complexly interrupting the flow of the bearing oil. By doing so, the bearing oil blocking performance and the bearing oil scattering performance are more improved.

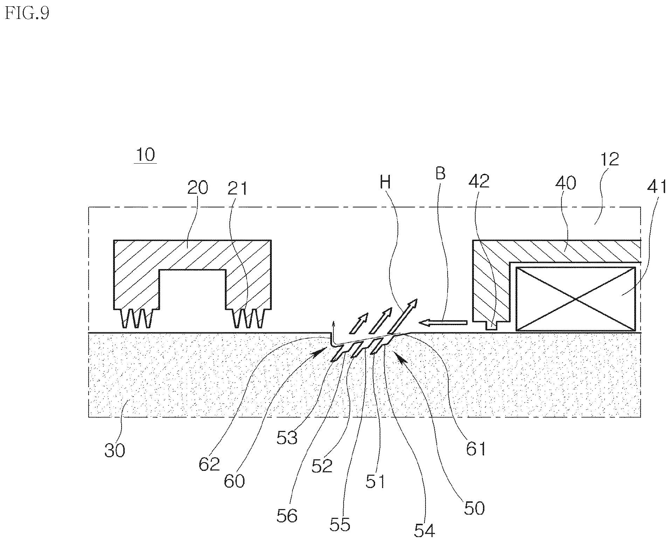

FIG. 9 is a view illustrating a structure for a rotor according to an eighth embodiment of the present invention. Referring to FIG. 9, according to the eight embodiment of the present invention, a structure for a rotor may include a rotor shaft 30, an oil scattering means 50, and an oil blocking means 60. A description for the rotor shaft 30 is the same as in the seventh embodiment of the present invention, and thus will be omitted.

The oil blocking means 60 may be formed between the oil deflector 20 and the bearing supporter 40 on the rotor shaft 30 in a circumferential direction, to block the flow of the bearing oil from the bearing supporter 40 toward the oil deflector 20.

According to the eight embodiment of the present invention, a surface of the oil blocking means 60 that is adjacent to the bearing supporter 40 may be inclined, and a surface of the oil blocking means 60 that is adjacent to the oil deflector 20 may be stepped in order to block the flow of the bearing oil from the bearing supporter 40 toward the oil deflector 20. That is, the oil blocking means 60 may be configured of the inclined flow inducing surface 61 and the step part 62. The bearing oil flows along the inclined flow inducing surface 61 and then the flow of the bearing oil is blocked at the step part 62 formed in an almost vertical direction.

Further, the oil scattering means 50 may be formed on the oil blocking means 60 in a circumferential direction, to scatter the bearing oil flowing from the bearing supporter 40 toward the oil deflector 20 along the surface of the rotor shaft 30.

FIG. 9 illustrates a side cross-sectional view of the rotor shaft 30, in which it is possible to confirm a form in which the oil blocking means 60 and the oil scattering means 50 are formed on the rotor shaft 30.

A direction in which the bearing oil is scattered by the oil scattering means 50 may be directed between the bearing supporter 40 and the casing 12. To this end, according to the eight embodiment of the present invention, the oil scattering means 50 may be provided as a plurality of scattering grooves 51, 52 and 53 and multi-step grooves 54, 55, and 56 formed on the rotor shaft 30. In addition, the scattering grooves 51, 52, and 53 and the multi-step grooves 54, 55, and 56 may be formed to be inclined toward the bearing supporter 40.

In this case, the flow of the bearing oil may be blocked stage by stage. The number of scattering grooves and multi-step grooves may be various according to the operation environment, but in the eighth embodiment of the present invention, the number of scattering grooves and the number of multi-step grooves are three, respectively.

That is, when the bearing oil added for smooth operation of the bearing 41 passes through the brush seal 42 installed on the bearing supporter 40 and reaches the scattering grooves 51, 52, and 53 and the multi-step grooves 54, 55, and 56 along the rotor shaft 30, the flow of the bearing oil is primarily disrupted by the scattering groove 51 and the multi-step groove 54 that are most adjacently disposed to the bearing supporter 40. Further, if the bearing oil passes over the first scattering groove 51 and the first multi-step groove 54 and keeps flowing by the movement of the rotor shaft 30 in the axial direction or the circumferential direction during the operation process of the turbine, the flow of the bearing oil is disrupted again by the second scattering groove 52 and the second multi-step groove 55 that are disposed at the center. Here, the third scattering groove 53 and the third multi-step groove 56 may be preliminarily formed in order to finally block the bearing oil passing over the second scattering groove 52 and the second multi-step groove 55.

Comparison of quantitative representation of an amount of the bearing oil removed by the respective scattering grooves 51, 52, and 53 and multi-step grooves 54, 55, and 56 is represented using a size of arrows. That is, the amount of bearing oil removed at the first scattering groove 51 and the first multi-step groove 54 is largest, and the amount of removed bearing oil will become smaller at the second scattering groove 52 and the second multi-step groove 55, and the third scattering groove 53 and the third multi-step groove 56 in sequence due to sequential blocking of the flow.

That is, it is possible to block the flow of the bearing oil toward the oil deflector 20 from the bearing supporter 40 stage by stage by the oil blocking means 60 and by forming the plurality of scattering grooves 51, 52, 53 and the plurality of multi-step grooves 54, 55, and 56 on the rotor shaft 30.

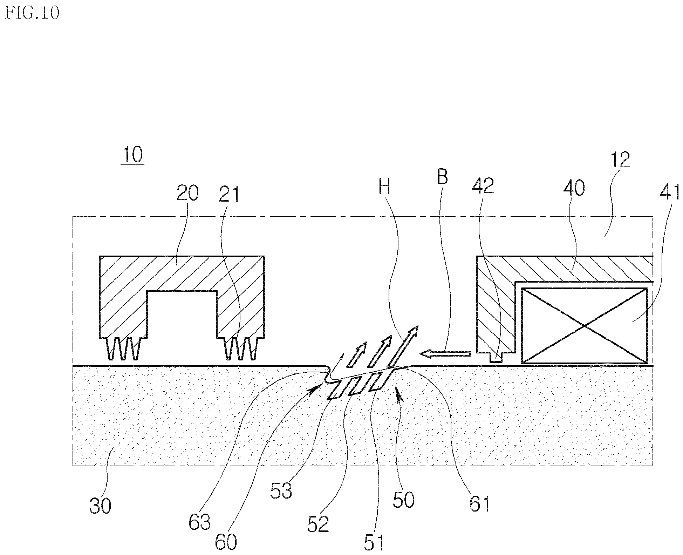

FIG. 10 is a view illustrating a structure for a rotor according to a ninth embodiment of the present invention. Referring to FIG. 10, according to the ninth embodiment of the present invention, a structure for a rotor may include a rotor shaft 30, an oil scattering means 50, and an oil blocking means 60. A description for the rotor shaft 30 is the same as in the seventh embodiment of the present invention, and thus will be omitted.

The oil blocking means 60 may be formed between the oil deflector 20 and the bearing supporter 40 on the rotor shaft 30 in a circumferential direction, to block the flow of the bearing oil from the bearing supporter 40 toward the oil deflector 20.

According to the ninth embodiment of the present invention, a surface of the oil blocking means 60 that is adjacent to the bearing supporter 40, and a surface of the oil blocking means 60 that is adjacent to the oil deflector 20 may be inclined toward the bearing supporter 40 in order to block the flow of the bearing oil from the bearing supporter 40 toward the oil deflector 20. That is, the oil blocking means 60 may be configured of the inclined flow inducing surface 61 and an inclined blocking part 63. The bearing oil flows along the inclined flow inducing surface 61 and then the flow of the bearing oil is blocked again at the inclined blocking part 63 that is inclined in the same direction.

Further, the oil scattering means 50 may be formed on the oil blocking means 60 in a circumferential direction, to scatter the bearing oil flowing from the bearing supporter 40 toward the oil deflector 20 along the surface of the rotor shaft 30.

FIG. 10 illustrates a side cross-sectional view of the rotor shaft 30, in which it is possible to confirm a form in which the oil blocking means 60 and the oil scattering means 50 are formed on the rotor shaft 30.

A direction in which the bearing oil is scattered by the oil scattering means 50 may be directed between the bearing supporter 40 and the casing 12. To this end, according to the ninth embodiment of the present invention, the oil scattering means 50 may be provided as a plurality of scattering grooves 51, 52 and 53 formed on the rotor shaft 30. In addition, the scattering grooves 51, 52, and 53 may be formed to be inclined toward the bearing supporter 40.

According to the ninth embodiment of the present invention, the oil blocking means 60 is formed on the rotor shaft 30, and the plurality of scattering grooves 51, 52, and 53 are formed on the oil blocking means 60, thereby complexly interrupting the flow of the bearing oil. By doing so, the bearing oil blocking performance and the bearing oil scattering performance are more improved.

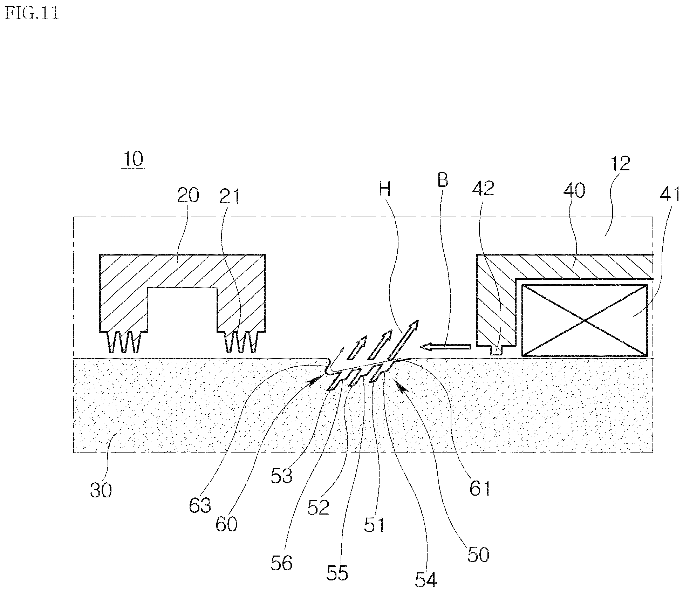

FIG. 11 is a view illustrating a structure for a rotor according to a tenth embodiment of the present invention. According to the tenth embodiment of the present invention, a structure for a rotor may include a rotor shaft 30, an oil scattering means 50, and an oil blocking means 60. A description for the rotor shaft 30 is the same as in the seventh embodiment of the present invention, and thus will be omitted.

The oil blocking means 60 may be formed between the oil deflector 20 and the bearing supporter 40 on the rotor shaft 30 in a circumferential direction, to block the flow of the bearing oil from the bearing supporter 40 toward the oil deflector 20.

According to the tenth embodiment of the present invention, a surface of the oil blocking means 60 that is adjacent to the bearing supporter 40, and a surface of the oil blocking means 60 that is adjacent to the oil deflector 20 may be inclined toward the bearing supporter 40 in order to block the flow of the bearing oil from the bearing supporter 40 toward the oil deflector 20. That is, the oil blocking means 60 may be configured of the inclined flow inducing surface 61 and the inclined blocking part 63. The bearing oil flows along the inclined flow inducing surface 61 and then the flow of the bearing oil is blocked at the inclined blocking part 63 that is inclined in the same direction.

Further, the oil scattering means 50 may be formed on the oil blocking means 60 in a circumferential direction, to scatter the bearing oil flowing from the bearing supporter 40 toward the oil deflector 20 along the surface of the rotor shaft 30.

FIG. 11 illustrates a side cross-sectional view of the rotor shaft 30, in which it is possible to confirm a form in which the oil blocking means 60 and the oil scattering means 50 are formed on the rotor shaft 30.

A direction in which the bearing oil is scattered by the oil scattering means 50 may be directed between the bearing supporter 40 and the casing 12. To this end, according to the tenth embodiment of the present invention, the oil scattering means 50 may be provided as a plurality of scattering grooves 51, 52 and 53 and multi-step grooves 54, 55, and 56 formed on the rotor shaft 30. In addition, the scattering grooves 51, 52, and 53 and the multi-step grooves 54, 55, and 56 may be formed to be inclined toward the bearing supporter 40.

In this case, the flow of the bearing oil may be blocked stage by stage. The number of scattering grooves and multi-step grooves may be various according to the operation environment, but in the tenth embodiment of the present invention, the number of scattering grooves and the number of multi-step grooves are three, respectively.

That is, when the bearing oil added for smooth operation of the bearing 41 passes through the brush seal 42 installed on the bearing supporter 40 and reaches the scattering grooves 51, 52, and 53 and the multi-step grooves 54, 55, and 56 along the rotor shaft 30, the flow of the bearing oil is primarily disrupted by the scattering groove 51 and the multi-step groove 54 that are most adjacently disposed to the bearing supporter 40. Further, if the bearing oil passes over the first scattering groove 51 and the first multi-step groove 54 and keeps flowing by the movement of the rotor shaft 30 in the axial direction or the circumferential direction during the operation process of the turbine, the flow of the bearing oil is disrupted again by the second scattering groove 52 and the second multi-step groove 55 that are disposed at the center. Here, the third scattering groove 53 and the third multi-step groove 56 may be preliminarily formed in order to finally block the bearing oil passing over the second scattering groove 52 and the second multi-step groove 55.

Comparison of quantitative representation of an amount of the bearing oil removed by the respective scattering grooves 51, 52, and 53 and multi-step grooves 54, 55, and 56 is represented using a size of arrows. That is, the amount of bearing oil removed at the first scattering groove 51 and the first multi-step groove 54 is largest, and the amount of removed bearing oil will become smaller at the second scattering groove 52 and the second multi-step groove 55, and the third scattering groove 53 and the third multi-step groove 56 in sequence due to sequential blocking of the flow.

That is, it is possible to block the flow of the bearing oil toward the oil deflector 20 from the bearing supporter 40 stage by stage by the oil blocking means 60 and by forming the plurality of scattering grooves 51, 52, 53 and the plurality of multi-step grooves 54, 55, and 56 on the rotor shaft 30.

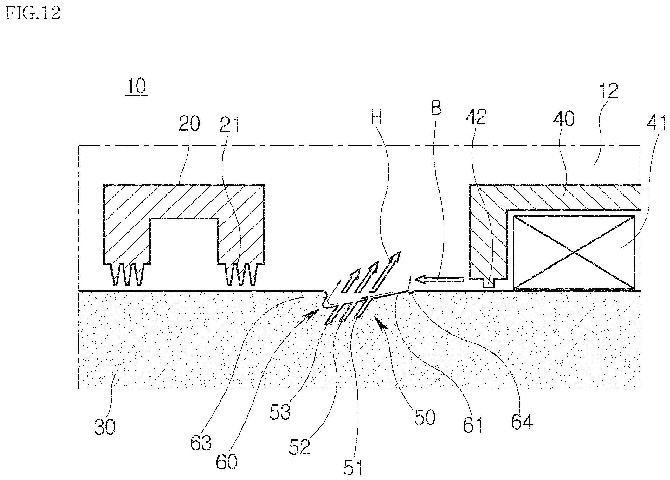

FIG. 12 is a view illustrating a structure for a rotor according to an eleventh embodiment of the present invention. According to the eleventh embodiment of the present invention, a structure for a rotor may include a rotor shaft 30, an oil scattering means 50, an oil blocking means 60, and a second interruption part. A description for the rotor shaft 30, the oil scattering means 50, and the oil blocking means 60 is the same as in the ninth embodiment of the present invention, and thus will be omitted.

The second interruption part may be formed between the oil blocking means 60 and the bearing supporter 40 on the rotor shaft 30, to block the flow of the bearing oil from the bearing supporter 40 toward the oil deflector 20.

According to the eleventh embodiment of the present invention, the second interruption part may be provided as a second fine groove 64 that is formed between the oil blocking means 60 and the bearing supporter 40. In this case, the flow of the bearing oil is interrupted by the second fine groove 64 in advance before the bearing oil is introduced into the oil blocking means 60 and the oil scattering means 50, and the bearing oil may be scattered toward the outer side of the rotor shaft 30 by the centrifugal force.

As such, according to the eleventh embodiment of the present invention, the flow of the bearing oil may be blocked and the bearing oil may be scattered stage by stage, thereby making it possible to more suppress the flow toward the oil deflector 20.

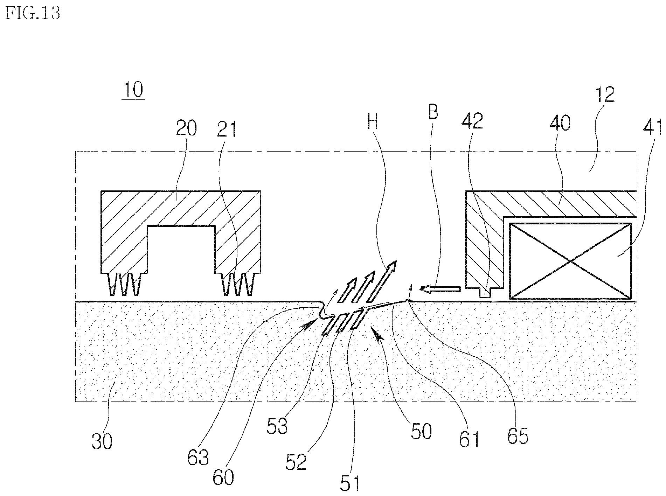

FIG. 13 is a view illustrating a structure for a rotor according to a twelfth embodiment of the present invention. According to the twelfth embodiment of the present invention, a structure for a rotor may include a rotor shaft 30, an oil scattering means 50, an oil blocking means 60, and a second interruption part. A description for the rotor shaft 30, the oil scattering means 50, and the oil blocking means 60 is the same as in the ninth embodiment of the present invention, and thus will be omitted.

The second interruption part may be formed between the oil blocking means 60 and the bearing supporter 40 on the rotor shaft 30, to block the flow of the bearing oil from the bearing supporter 40 toward the oil deflector 20.

According to the twelfth embodiment of the present invention, the second interruption part may be provided as a second fine protrusion 65 that is formed between the oil blocking means 60 and the bearing supporter 40. In this case, the flow of the bearing oil is interrupted by the second fine protrusion 65 in advance before the bearing oil is introduced into the oil blocking means 60 and the oil scattering means 50, and the bearing oil may be scattered toward the outer side of the rotor shaft 30 by the centrifugal force.

As such, according to the twelfth embodiment of the present invention, the flow of the bearing oil may be blocked and the bearing oil may be scattered stage by stage, thereby making it possible to more suppress the flow toward the oil deflector 20.

According to the embodiments of the present invention, it is possible to block the flow of the bearing oil from the bearing toward the oil deflector direction by forming a groove having a predetermined shape on the shaft positioned between the bearing of the rotor and the oil deflector.

Further, it is possible to remove the bearing oil by allowing the formed groove to have a slope toward the bearing direction so that the bearing oil introduced into the formed groove does not remain but is scattered in the bearing direction at the time of rotation of the shaft.

Further, it is possible to more effectively block the flow of the bearing oil by disposing a plurality of grooves formed as described above on the shaft of the rotor, or by configuring a multi-step groove.

Further, it is possible to reinforce blocking and scattering of the bearing oil by implementing the fine protrusion or the fine depression adjacent to the formed groove.

This ultimately may prevent the carbonization caused by the reaction with the high-temperature operating fluid at the oil deflector by blocking the flow of the bearing oil toward the oil deflector direction from the bearing.

The above description merely illustrates specific embodiments of the structure for a rotor of removing bearing oil.

Therefore, it is to be noted that the present invention may be variously substituted and modified by those skilled in the art without departing from the spirit of the present invention as disclosed in the accompanying claims.

## Claims

1. A structure for a rotor of removing bearing oil, comprising:
a rotor shaft (30) disposed in a casing (12) of a turbine; and
an annular oil scattering means (50) formed between an oil deflector (20) and a bearing supporter (40) on the rotor (30) shaft in a circumferential direction to scatter bearing oil flowing from the bearing supporter (40) toward the oil deflector (20) along a surface of the rotor shaft; wherein the oil scattering means (50) is provided as at least a scattering groove (51, 52, 53) formed on the rotor shaft(30), **characterised in that**
the scattering groove is inclined toward the bearing supporter (40) with respect to the axial direction of the rotor shaft (30); and
the scattering groove (51, 52, 53) is configured of an one-side slope (51a) and an opposite slope (51b) that are inclined at a gradient Φ₀ and a groove end (51c).

2. The structure of claim 1, wherein a surface of the scattering groove (51, 52, 53) that is adjacent to the bearing supporter (40) is inclined in multiple steps.

3. The structure of claim 1 or 2, wherein the scattering groove (51, 52, 53) is formed in plural on the rotor shaft (30).

4. The structure of claim 3, further comprising:
a first interruption part (57; 58) disposed between the plurality of scattering grooves (51, 52, 53) to interrupt flow of the bearing oil from the bearing supporter (40) toward the oil deflector (20).

5. The structure of claim 4, wherein the first interruption part (57; 58) is provided as a first fine groove (57) formed between the plurality of scattering grooves (51, 52, 53).

6. The structure of claim 4, wherein the first interruption part (57; 58)is provided as a first fine (58) protrusion formed between the plurality of scattering grooves (51, 52, 53).

7. The structure of claim 1, further comprising:
an annular oil blocking means (60) formed between the oil deflector (20) and the bearing supporter (40) on the rotor shaft (30) in the circumferential direction to block flow of the bearing oil from the bearing supporter (40) toward the oil deflector (20),
wherein the oil scattering means (50) is formed on the oil blocking means (60) in the circumferential direction.

8. The structure of claim 7, wherein a surface of the oil blocking means (60) that is adjacent to the bearing supporter (40) is inclined, and a surface of the oil blocking means (60) that is adjacent to the oil deflector (20) is stepped in order to block the flow of the bearing oil from the bearing supporter (40) toward the oil deflector (20).

9. The structure of claim 7, wherein a surface of the oil blocking means (60) that is adjacent to the bearing supporter (40), and a surface of the oil blocking means that is adjacent to the oil deflector (20) are inclined toward the bearing supporter (40) in order to block the flow of the bearing oil from the bearing supporter (40) toward the oil deflector (20).

10. The structure of claim 8 or 9, wherein the scattering groove (51, 52, 53) is formed in plural on the rotor shaft.

11. The structure of claim 8 or 9, further comprising:
a second interruption part (64; 65) disposed between the oil blocking means (60) and the bearing supporter (40) on the rotor shaft (30) to interrupt the flow of the bearing oil from the bearing supporter (40) toward the oil deflector (20).

12. The structure of claim 11, wherein the second interruption part (64; 65) is provided as a second fine groove (64) formed between the oil blocking means (20) and the bearing supporter (40).

13. The structure of claim 12, wherein the second interruption part (64; 65) is provided as a second fine protrusion (65) formed between the oil blocking means (20) and the bearing supporter (40).

## Patentansprüche

1. Struktur für einen Rotor zum Entfernen von Lageröl, umfassend:
eine Rotorwelle (30), die in einem Gehäuse (12) einer Turbine angeordnet ist; und
ein ringförmiges Ölverteilungsmittel (50), das zwischen einem Öldeflektor (20) und einer Lagerstützvorrichtung (40) an der Rotorwelle (30) in einer Umfangsrichtung ausgebildet ist, um Lageröl, das von der Lagerstützvorrichtung (40) in Richtung des Öldeflektors (20) fließt, entlang einer Oberfläche der Rotorwelle zu verteilen; wobei das Ölverteilungsmittel (50) mindestens als eine Verteilungsrinne (51, 52, 53) ausgebildet ist, die in der Rotorwelle (30) ausgebildet ist,
**dadurch gekennzeichnet, dass**
die Verteilungsrinne in Richtung der Lagerstützvorrichtung (40) mit Bezug auf die axiale Richtung der Rotorwelle (30) geneigt ist; und
die Verteilungsrinne (51, 52, 53) aus einer auf einer Seite ausgebildeten Schräge (53a) und einer gegenüberliegenden Schräge (51b), die mit einem Gradienten Φ₀ geneigt sind, und einem Rinnen-Ende (51c) ausgebildet ist.

2. Struktur nach Anspruch 1, wobei eine Fläche der Verteilungsrinne (51, 52, 53), die sich neben der Lagerstützvorrichtung (40) befindet, in mehreren Stufen geneigt ist.

3. Struktur nach Anspruch 1, wobei die Verteilungsrinne (51, 52, 53) zu mehreren in der Rotorwelle (30) ausgebildet ist.

4. Struktur nach Anspruch 3, des Weiteren umfassend:
einen ersten Unterbrechungsteil (57; 58), der zwischen den mehreren Verteilungsrinnen (51, 52, 53) angeordnet ist, um den Fluss des Lageröls von der Lagerstützvorrichtung (40) in Richtung des Öldeflektors (20) zu unterbrechen.

5. Struktur nach Anspruch 4, wobei der erste Unterbrechungsteil (57; 58) als eine erste Feinrinne (57) ausgebildet ist, die zwischen den mehreren Verteilungsrinnen (51, 52, 53) angeordnet ist.

6. Struktur nach Anspruch 4, wobei der erste Unterbrechungsteil (57; 58) als ein erster Feinvorsprung (58) ausgebildet ist, der zwischen den mehreren Verteilungsrinnen (51, 52, 53) angeordnet ist.

7. Struktur nach Anspruch 1, des Weiteren umfassend:
ein ringförmiges Ölblockiermittel (60), das zwischen dem Öldeflektor (20) und der Lagerstützvorrichtung (40) an der Rotorwelle (30) in der Umfangsrichtung ausgebildet ist, um den Fluss des Lageröls von der Lagerstützvorrichtung (40) in Richtung des Öldeflektors (20) zu blockieren,
wobei das Ölverteilungsmittel (50) an dem Ölblockiermittel (60) in der Umfangsrichtung ausgebildet ist.

8. Struktur nach Anspruch 7, wobei eine Fläche des Ölblockiermittels (60), die sich neben der Lagerstützvorrichtung (40) befindet, geneigt ist, und eine Fläche des Ölblockiermittels (60), die sich neben dem Öldeflektor (20) befindet, gestuft ist, um den Fluss des Lageröls von der Lagerstützvorrichtung (40) in Richtung des Öldeflektors (20) zu blockieren.

9. Struktur nach Anspruch 7, wobei eine Fläche des Ölblockiermittels (60), die sich neben der Lagerstützvorrichtung (40) befindet, und eine Fläche des Ölblockiermittels, die sich neben dem Öldeflektor (20) befindet, in Richtung der Lagerstützvorrichtung (40) geneigt sind, um den Fluss des Lageröls von der Lagerstützvorrichtung (40) in Richtung des Öldeflektors (20) zu blockieren.

10. Struktur nach Anspruch 8 oder 9, wobei die Verteilungsrinne (51, 52, 53) zu mehreren in der Rotorwelle ausgebildet ist.

11. Struktur nach Anspruch 8 oder 9, des Weiteren umfassend: einen zweiten Unterbrechungsteil (64; 65), der zwischen dem Ölblockiermittel (60) und der Lagerstützvorrichtung (40) an der Rotorwelle (30) angeordnet ist, um den Fluss des Lageröls von der Lagerstützvorrichtung (40) in Richtung des Öldeflektors (20) zu unterbrechen.

12. Struktur nach Anspruch 11, wobei der zweite Unterbrechungsteil (64; 65) als eine zweite Feinrinne (64) ausgebildet ist, die zwischen dem Ölblockiermittel (20) und der Lagerstützvorrichtung (40) angeordnet ist.

13. Struktur nach Anspruch 12, wobei der zweite Unterbrechungsteil (64; 65) als ein zweiter Feinvorsprung (65) ausgebildet ist, der zwischen dem Ölblockiermittel (20) und der Lagerstützvorrichtung (40) angeordnet ist.

## Revendications

1. Structure pour un rotor d'enlèvement d'huile de palier, comprenant :
un arbre de rotor (30) disposé dans un carter (12) d'une turbine; et
un moyen de diffusion d'huile annulaire (50) formé entre un déflecteur d'huile (20) et un support de palier (40) sur l'arbre de rotor (30) dans une direction circonférentielle pour diffuser l'huile de palier circulant du support de palier (40) vers le déflecteur d'huile (20) le long d'une surface de l'arbre de rotor; dans lequel le moyen de diffusion d'huile (50) se présente sous la forme d'au moins une rainure de diffusion (51, 52, 53) formée sur l'arbre de rotor (30), **caractérisée en ce que**
la rainure de diffusion est inclinée vers le support de palier (40) par rapport à la direction axiale de l'arbre de rotor (30); et
la rainure de diffusion (51, 52, 53) est constituée d'une pente d'un côté (51a) et d'une pente opposée (51b) qui sont inclinées à un gradient de Φ₀, et d'une extrémité de rainure (51c) .

2. Structure selon la revendication 1, dans laquelle une surface de la rainure de diffusion (51, 52, 53) qui est adjacente au support de palier (40) est inclinée sur plusieurs étages.

3. Structure selon la revendication 1 ou 2, dans laquelle la rainure de diffusion (51, 52, 53) est formée de manière plurielle sur l'arbre de rotor (30).

4. Structure selon la revendication 3, comprenant en outre : une première partie d'interruption (57; 58) disposée entre la pluralité de rainures de diffusion (51, 52, 53) pour interrompre l'écoulement de l'huile de palier à partir du support de palier (40) vers le déflecteur d'huile (20).

5. Structure selon la revendication 4, dans laquelle la première partie d'interruption (57; 58) se présente sous la forme d'une première rainure fine (57) formée entre la pluralité de rainures de diffusion (51, 52, 53).

6. Structure selon la revendication 4, dans laquelle la première partie d'interruption (57; 58) se présente sous la forme d'une première saillie fine (58) formée entre la pluralité de rainures de diffusion (51, 52, 53).

7. Structure selon la revendication 1, comprenant en outre :
un moyen de blocage d'huile annulaire (60) formé entre le déflecteur d'huile (20) et le support de palier (40) sur l'arbre de rotor (30) dans la direction circonférentielle pour bloquer l'écoulement de l'huile de palier à partir du support de palier (40) vers le déflecteur d'huile (20),
dans lequel le moyen de diffusion d'huile (50) est formé sur le moyen de blocage d'huile (60) dans la direction circonférentielle.

8. Structure selon la revendication 7, dans laquelle une surface du moyen de blocage d'huile (60) qui est adjacente au support de palier (40) est inclinée, et une surface du moyen de blocage d'huile (60) qui est adjacente au déflecteur d'huile (20) est étagée de manière à bloquer l'écoulement de l'huile de palier à partir du support de palier (40) vers le déflecteur d'huile (20).

9. Structure selon la revendication 7, dans laquelle une surface du moyen de blocage d'huile (60) qui est adjacente au support de palier (40), et une surface du moyen de blocage d'huile qui est adjacente au déflecteur d'huile (20) sont inclinées vers le support de palier (40) afin de bloquer l'écoulement de l'huile de palier à partir du support de palier (40) vers le déflecteur d'huile (20).

10. Structure selon la revendication 8 ou 9, dans laquelle la rainure de diffusion (51, 52, 53) est formée de manière plurielle sur l'arbre de rotor.

11. Structure selon la revendication 8 ou 9, comprenant en outre :
une seconde partie d'interruption (64; 65) disposée entre le moyen de blocage d'huile (60) et le support de palier (40) sur l'arbre de rotor (30) pour interrompre l'écoulement de l'huile de palier à partir du support de palier (40) vers le déflecteur d'huile (20).

12. Structure selon la revendication 11, dans laquelle la seconde partie d'interruption (64; 65) se présente sous la forme d'une seconde rainure fine (64) formée entre le moyen de blocage d'huile (20) et le support de palier (40).

13. Structure selon la revendication 12, dans laquelle la seconde partie d'interruption (64; 65) se présente sous la forme d'une seconde saillie fine (65) formée entre le moyen de blocage d'huile (20) et le support de palier (40).
